(19) Europäisches Patentamt
European Patent Office
Office européen des brevets

(11) **EP 1 868 209 A1**

(12) **EUROPEAN PATENT APPLICATION**
published in accordance with Art. 158(3) EPC

(43) Date of publication:
**19.12.2007 Bulletin 2007/51**

(51) Int Cl.:
***G21F 9/02*** (2006.01)    ***B01J 20/20*** (2006.01)

(21) Application number: **06730820.5**

(22) Date of filing: **31.03.2006**

(86) International application number:
**PCT/JP2006/306872**

(87) International publication number:
**WO 2006/109595 (19.10.2006 Gazette 2006/42)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.04.2005 JP 2005109712**

(71) Applicants:
• **Toyo Boseki Kabushiki Kaisha**
  **Osaka-shi, Osaka 530-8230 (JP)**
• **Wakaida Engineering Inc.**
  **Nerima-ku**
  **Tokyo 1770034 (JP)**
• **The University of Tokyo**
  **Bunkyo-Ku,**
  **Tokyo 113-8654 (JP)**

(72) Inventors:
• **INOUE, Makoto**
  **Otsu-shi, Shiga 5200292 (JP)**
• **MIYAZAKI, Ichiro**
  **3540033 (JP)**
• **NOGAWA, Norio**
  **c/o Radioisotope Center**
  **Bunkyo-ku, Tokyo 1130032 (JP)**

(74) Representative: **Perrey, Ralf**
**Müller-Boré & Partner,**
**Grafinger Strasse 2**
**81671 München (DE)**

(54) **FILTER FOR REMOVING RADIOACTIVE SUBSTANCE AND FILTER UNIT EMPLOYING THE SAME**

(57)    The object of the invention is to provide a filter where removing efficiency for organic iodine is high and the removing efficiency even after aeration for long time is also high. The invention relates to a filter for removal of radioactive substances where the radioactive substances in small amounts in gas phase are collected using activated carbon fiber, wherein total acidic group amount in said activated carbon fiber is not more than 0.2 meq/g, at least one kind of chemical substance is impregnated in said activated carbon fiber and the equilibrium moisture adsorption rate of said activated carbon fiber at the relative humidity of 45% is not more than 10% by weight. The invention also relates to a filter for removal of radioactive substances where the radioactive substances in small amounts in gas phase are collected using a nonwoven fabric constituted from activated carbon fiber, wherein an average single fiber diameter of said activated carbon fiber is not more than 25 μm.

[Fig. 1]

EP 1 868 209 A1

**Description**

Technical Field of the Invention

The present invention relates to a filter for removal of radioactive substances which is to collect and remove the radioactive gas generated in medical facilities, atomic facilities, etc. and also relates to a filter unit using the same.

Background Art

Since radioactive gas such as radioactive iodine is exhausted in medical facilities, atomic facilities, etc., an air purifying device is installed in a gas-treating route of an air conditioning apparatus and, after concentration of the generated radioactive gas is lowered to the standard value stipulated by the law, the resulting air is exhausted outside the facilities.

As an increase in utilization of atomic technique in recent years, amount of radioactive gas exhausted in research facilities of universities, medical facilities, atomic power stations, etc. tends to increase and, in view of consideration in environments, stipulation for concentration of radioactive gas exhausted into air has been set more and more severely.

In view of the above, reconsideration in air purifying devices to be installed has been attempted and, when stipulation for radioactive gas concentration is planned to be severer, there will happen the situation where air purifying devices which was installed already are to be exchanged or modified. For such a purpose, there is a proposal that a charcoal filter made into a sheet is installed in the device and collection and removal of radioactive gas components are conducted by passing the gas through said sheet-form charcoal filter (Japanese Patent Laid-Open No. 2003/066, 191) . In this document, activated carbon fiber in a woven form or a nonwoven form is used as a charcoal filter.

With regard to the activated carbon fiber used here, there is a proposal for that where an amine effective for organic adsorption is impregnated in an activated carbon fiber sheet having a pore shape in which pore volume of 3 to 30 nm pore diameter is not more than 0.15 cc/g while pore volume of not more than 3 nm pore diameter is not less than 0.50 cc/g and a protective sheet is layered on at least surface of the activated carbon fiber sheet (Japanese Patent Laid-Open No.2004/205,490). There is another proposal for a filter with which small amount of a radioactive substance in water is adsorbed utilizing an activated carbon fiber which is subjected to an oxidization treatment (Japanese Patent Laid-Open No. 06/343,856).

When the activated carbon fiber is in a sheet form, it is used if necessary in such a manner that the filtering material is pleated and, via a separator formed into a wavy pattern, it is folded in a zigzag shape, assembled and made into a unit. Alternatively, it is used in such a manner that a comb-shaped separator is inserted into the pleats, folded in zigzag and assembled into a unit. The filter as such usually exhausts much air while it is also to surely adsorb the radioactive substance which is generated at rare intervals.

However, in the conventional activated carbon fiber, there are problems that its removing efficiency for organic iodine represented by methyl iodide is bad as compared with iodine ($I_2$) vapor and that it worsens in a relatively early stage. That is probably due to the fact that the gas in small amount in air upon aeration inhibits the adsorption of organic iodine. In the findings in the past, said gas in small amount is said to be nitrogen oxide or sulfur oxide although that has not been specified yet. The gas in small amount as such is adsorbed with a specific adsorbing site of the activated carbon as a result of aeration for a long period and, as a result, a collecting efficiency of particularly the radioactive organic iodine after aeration for a long period lowers. Although there is a proposal as mentioned in Japanese Patent Laid-Open No. 2004/205,490 where improvement in the removing efficiency is aimed by impregnation of a chemical substance of an amine type but that is not still satisfactory. Accordingly, it is necessary that large amount of activated carbon fiber filter is charged in preparing a unit and, as a result, a pressure loss as the unit becomes very high and weight becomes heavy whereby its practicality as a unit becomes poor.

Further, the charcoal filter unit used in this field is also demanded to have a life characteristic whereby, even after aeration for a long period, nearly the same degree of collecting efficiency as in the initial stage is retained in addition to the general collecting efficiency and pressure loss in the initial stage. When activated carbon fiber is used as a filter unit for removal of radioactive substances, it is necessary that the activated carbon is charged as much as possible and is used as a unit whereby the predetermined properties such as initial collecting efficiency and life are maintained within an allowable range of pressure loss of such a unit. Therefore, since weight of a single unit substance becomes heavy, handling property as a unit lowers and practicality becomes poor. Common charcoal filter which has been put into the market is nearly 60 kg per unit and many persons and tools such as chain block are necessary for its exchange.

Disclosure of the Invention

Problem that the Invention is to Solve

The present invention has been created for solving the above-mentioned problems in the prior art and its object is to provide a filter where removing efficiency for organic iodine is high and the removing efficiency even after aeration for long time is also high, to provide a filter unit having light weight while properties such as collecting efficiency and pressure loss in the initial stage and after aeration for a long period are still maintained and to solve the problems in charcoal filters which have been used at present equipped with a layer of 1 inch thickness being charged with granular activated carbon.

Means for Solving the Problem

The present invention has been achieved as a result of intensive investigations for achieving such problems. Thus, the present invention relates to a filter for removal of radioactive substances where the radioactive substances in small amounts in gas phase are collected using activated carbon fiber, characterized in that, total acidic group amount in said activated carbon fiber is not more than 0.2 meq/g, that at least one kind of chemical substance is impregnated in said activated carbon fiber and that the equilibrium moisture adsorption rate of said activated carbon fiber at the relative humidity of 45% is not more than 10% by weight.
In a preferred embodiment of the filter for removal of the radioactive substances according to the present invention, the impregnated amount of the chemical substances to the activated carbon fiber is 0.1% by weight to 5% by weight.
The present invention also relates to a filter for removal of radioactive substances where the radioactive substances in small amounts in gas phase are collected using a nonwoven fabric constituted from activated carbon fiber, characterized in that, an average single fiber diameter of said activated carbon fiber is not more than 25 $\mu$m.
In a preferred embodiment of the filter for removal of the radioactive substances according to the present invention, a transmission velocity coefficient of the filter is 0.07 to 0. 60 cm/s/Pa and weight of the activated carbon fiber contained in the filter is 150 g/m$^2$ to 1,500 g/m$^2$.
In a preferred embodiment of the filter for removal of the radioactive substances according to the present invention, it is used for a filter unit for removal of the radioactive substances.

Advantages of the Invention

In accordance with the present invention, it is possible to provide a filter where not only the initial removal efficiency of radioactive organic iodine but also removal efficiency after aeration for a long period are high. As a result, it is possible to constitute a unit where the charged amount of the filter is low and, as a result, it is now possible to provide a filter unit where the weight is light and the pressure loss is small.

Brief Description of the Drawings

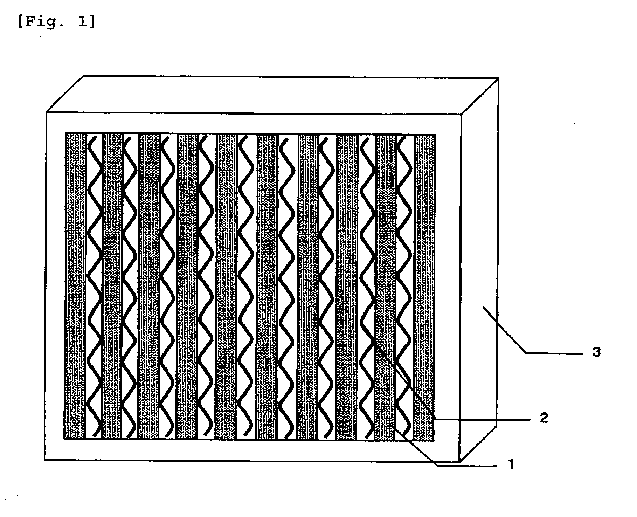

Fig. 1 is a brief drawing which shows the whole filter unit using the filter of the present invention.

Explanation of Reference Signs in Drawing

    1: filter
    2: separator
    3: frame

Best Mode for Carrying Out the Invention

The filter for removal of radioactive substances in accordance with the present invention will be illustrated in detail as hereunder.
Fig. 1 is a brief drawing which shows the whole filter unit using the filter of the present invention. As will be noted from Fig. 1, the filter unit is constituted from the pleated filter 1 and separator 2 as well as from a frame 3 surrounding them. In the case of the unit as such, it is desired that a filter containing as much as possible adsorbent is charged so as to satisfy the life and the removing efficiency. However, too much charging causes a high pressure loss and, therefore, it is desired in view of design of a filter that a filter having high density and thin thickness is used so as to make the space between pleats after pleating and to make the structure resistance as low as possible whereby the pressure loss is reduced. For such an object, the charging amount of the filter used is to be made as small as possible and, at the same time, the collecting efficiency is to be satisfied. Further, even if the collecting efficiency in the initial stage is good, the filter unit loses its collecting efficiency during it is aerated for a long period after being installed and such a situation is to be avoided. Although the cause therefor is still uncertain, it will be probably due to acidic gas such as nitrogen oxide and sulfur oxide and to the fact that said gas adsorbs the specific adsorbing site of the activated carbon together with moisture in the air. Particularly, the moisture which adsorbs at a low relatively humidity is apt to be adsorbed with some specific pores of the activated carbon and that results in suppressing the adsorption of organic iodine. Further, although the chemical substances enhance the collecting characteristic of organic iodine by chemical reaction, it adsorbs large amount of moisture at the low relative humidity at the same time and that rather lowers the collecting efficiency after aeration for long time.

Now, in the filter of the present invention, at least one kind of chemical substance is impregnated in the activated carbon fiber constituting the filter and the equilibrium moisture adsorption rate at the relative humidity of 45% is made not more than 10% by weight, preferably not more than 9% by weight or, more preferably, not more than 8% by weight whereby adsorption rate of organic iodine after aeration for a long period does not lower. When the equilibrium moisture adsorption rate is more than 10% by weight, adsorbed amount of moisture becomes large during aeration and degree of absorption of acidic gas in the air becomes high and, as a result, pores for adsorption of organic iodine are blocked and adsorbed amount of organic iodine after aeration decreases. That is not preferred.

In addition to the above-mentioned pores, functional groups such as hydroxyl group, carboxyl group, etc. which are acidic groups are also present on the surface of the activated carbon. Inherently, those functional groups greatly contribute in wetting property with water, but they do not greatly contribute in adsorption of moisture in a gas phase system. However, the presence of such functional groups has a weak bond to the impregnated chemical substances and deprives of the activity of the chemical substances whereby that is a cause for lowering of the initial removing efficiency. Accordingly, in the filter of the present invention, total acidic group amount in the activated carbon fiber used as a filter is made not more than 0.2 meq/g, preferably not more than 0.19 meq/g and, more preferably, not more than 0.18 meq/g whereby the removing effect of organic iodine in the initial stage is not lowered. When amount of the total acidic groups is more than 0.2 meq/g, the activity of the chemical substances is reduced due to the above-mentioned reason and that is not preferred.

In the filter of the present invention, nonwoven fabric constituted from activated carbon fiber is used and an average single fiber diameter of said activated carbon fiber is made not more than 25 μm whereby high efficiency, long life and low pressure loss are able to be achieved by the smallest amount of activated carbon fiber. When balance in pressure loss, thickness and weight are taken into consideration, an average single fiber diameter of activated carbon fiber is preferably not more than 24 μm and, more preferably, not more than 23 μm. When an average single fiber diameter is more than 25 μm, although the pressure loss becomes small, much activated carbon fiber will be necessary for achieving necessary collecting efficiency and life characteristic whereby, as a result, weight in making into a filter unit becomes big and that is not preferred. Further, in the filter of the present invention, it is preferred in view of a balance between pressure loss and removing efficiency that the filter of the present invention is constituted in such a manner that the transmission velocity coefficient of the filter is within a range of from 0. 07 to 0.60 cm/s/Pa, preferably from 0.071 to 0.59 cm/s/Pa and, more preferably, from 0.072 to 0.58 cm/sPa. The transmission velocity coefficient is a value where wind velocity upon measurement of pressure loss of the filter is divided by the measured pressure loss and, when it is big, aeration resistance is usually low while, when it is small, aeration resistance is high. Although the filter of the present invention has an appropriate aeration resistance, it achieves the necessary removing property for radioactive iodine by the smallest amount of activated carbon fiber. However, when the transmission velocity coefficient is less than 0.07 cm/s/Pa, the aeration resistance becomes high and, therefore, the pressure loss under the state in making into a filter unit becomes high while, when it is more than 0.60 cm/s/Pa, the aeration resistance becomes very low and, therefore, radioactive organic iodine which is a substance to be adsorbed just passes therethrough whereby it is not possible to achieve the necessary removing property for radioactive iodine. Thus, any of them is not preferred. Further, it is preferred that, in the filter of the present invention, weight of the activated carbon fiber constituting the filter is 150 to 1,500 g/m² for achieving the necessary removing property for radioactive iodine. It is the amount necessary for adsorption of iodine 131 constituting the radioactive organic iodine compound represented by radioactive iodine and, particularly, radioactive methyl iodide ($CH_3{}^{131}I$) and also necessary to make the influence of an inhibiting substance upon aeration small and is preferably 160 to 1,400 g/m² and, more preferably, 170 to 1,300 g/m². When weight of the activated carbon fiber is less than 150 g/m², it is not possible to achieve the necessary removing efficiency for organic iodine while, when it is more than 1,500 g/m², bending characteristic as a filter is significantly deteriorated and that is not preferred.

With regard to the activated carbon fiber, it is preferred that at least one kind of chemical substance is impregnated therein so that a decrease in the collecting efficiency for organic iodine after aeration for a long period is made small. Examples of the chemical substance to be impregnated in the activated carbon fiber are amines such as cyclooctane (triethylenediamine), N,N'-bis-(3-aminopropyl)-piperazine, N,N-dimethylaminoethyl methacrylate, N,N-dimethylaminopropylamine, 3-aminopropyltrimethoxysilane, 1,5-diazabicycloundecene, poly-tert-butylaminoethyl methacrylate, polyethyleneimine, 1,5-diazabicyclo[4,3,0]-non-5-ene, 1,5-diazabicyclo[5,4,0]undec-5-ene, 2-methyl-1,4-diazabicyclo[2,2,2] octane, phenylhydrazine, 2-cyanopyridine, diisopropylamine, trimethylaminoethylpiperazine, hexamethylenetetramine, methylpolyethyleneimine and polyalkylpolyamine and metal iodides such as sodium iodide, potassium iodide and tin iodide although there is no limitation for the type of the chemical substance to be impregnated. However, amount of the chemical substance which is impregnated in the activated carbon fiber is preferred to be not more than 5% by weight, more preferred to be not more than 4% by weight and still more preferred to be not more than 3% by weight in order to maintain a low equilibrium moisture adsorption rate at the relative humidity of 45%. When the impregnating amount is more than 5% by weight, pores of the activated carbon are blocked, the impregnated chemical substance adsorbs moisture, absorption of acidic gas becomes much and adsorption characteristic for organic iodine is inhibited whereby that is not preferred. The impregnating amount is preferred to be not less than 0.1% by weight, more preferred to be not less than 0.15% by weight, still more preferred to be not less than 0.2% by weight and further preferred to be not less than 0.3% by weight for improving the adsorbing life for methyl iodide having radioactive iodine. The case where it is less than 0.1% by weight makes the reaction of the chemical substance with methyl iodide difficult and, therefore, that is not preferred. Method for the calculation of the impregnating amount varies depending upon the substance and, in the case of a metal iodide, it is made into ash by heating and dissolved in an acid and metal content is analyzed by a known method such as atomic absorption spectrometry and plasma emission spectrometry and converted to mole(s) to give an impregnating rate of the metal iodide. In the case of amines, the sample is extracted and the amount is determined from the decreasing amount of the weight or is indirectly determined from pH or titration of the extracted solution.

In the filter of the present invention, an activated carbon fiber having the common specific surface area which is a specific surface area of not less than 700 $m^2$/g by a BET method is used and it is able to be manufactured in such a manner that the total acidic group amounts of said activated carbon fiber are not more than 0.2 meq/g, at least one kind of chemical substance is impregnated therein and an equilibrium moisture adsorption rate at the relative humidity of 45% is not more than 10% by weight. For example, the activated carbon fiber of the present invention is able to be manufactured by carbonization of a material such as natural cellulose fiber (e.g., cotton and hemp), rayon, polynosic, regenerated cellulose fiber by a melt spinning method or synthetic fiber (e.g., polyvinyl alcohol fiber, acrylate fiber, aromatic polyamide fiber, cross-linking formaldehyde fiber, lignin fiber, phenol fiber and petroleum pitch fiber) at 800 to 1,200°C in an activating gas followed by activating with an activating gas containing carbon dioxide gas or carbon monoxide or water vapor. It is particularly preferred that a material having high carbon amount such as phenol fiber or petroleum pitch fiber is used so as to suppress the generation of decomposed gas, carbonization and activation are conducted at the temperature of as high as not lower than 900°C and the concentration of water vapor which is an activating gas is set at low. It is also possible to manufacture by heating in an atmosphere of nitrogen or argon or *in vacuo* at 700 to 1, 200°C or by treating with hydrogen plasma or the like so that the acidic groups in the activated carbon fiber manufactured by a known method are removed.

As to the tissue of the activated carbon fiber sheet, nonwoven fabric, woven fabric, paper-like one, etc. are available although there is no particular limitation therefor but an appropriate one is used by taking strength and pressure loss into consideration. It is preferred in enhancing the contained rate of the activated carbon fiber in a sheet that the sheet is formed at the stage of a material for the activated carbon fiber and then carbonization and activation are carried out by the above-mentioned method so as to prepare the activated carbon fiber although it is also preferred that a material in a chip form is used for the preparation of the activated carbon fiber followed by mixing with a binder or the like to give a sheet. It is further possible that such a sheet is used as a layered filtering material by appropriately conjugating and layering so as to retain the handling property upon formation of a unit. With regard to a conjugating method, there are a chemical bonding method using an adhesive, a thermal bonding method using a hot-melt resin, a method using a needle punch, a stitch bonding method and a method by kilting although there is no particular limitation therefor. In order to further retain the strength of the sheet, it is also possible that other types of sheet than the above-mentioned activated carbon fiber are layered. When a chemical substance is impregnated in an activated carbon fiber, it is preferred to adopt a method where an aqueous solution of the chemical substance is prepared, an activated carbon fiber is impregnated therein, dehydrated, dried and, if necessary, layered together, for example, with other sheet in case the uniformity of the impregnation is taken into consideration although there is no particular limitation therefor.

The filter prepared as such is cut into a suitable size so that the passing wind velocity calculated from airflow per unit and filter area is made not more than 0.12 m/s and folded together with a separator and the resulting thing made into a unit is used. In that case, when disposal after use is taken into consideration, the separator to be used therefor is preferred to be a material which is able to be burned comprising paper or nonwoven fabric but there is no particular limitation in case burning is not essential. With regard to the shape of a separator, there are known ones such as wavy form, comb form and bead mold and a wave form which stably fixes the filter is preferably used. The pleated filter is applied with resin on its terminal and made into a unit by connecting to a frame. As to the resin to be applied to the terminal, there are known materials such as polyester type, vinyl acetate type, cellulose type, polyolefin type, epoxy resin type and foamed polyurethane type and, in fixing a filter having a low bulk density, the use of a foamed polyurethane type is preferred when stability and adhesion to the filter are taken into consideration. As to the frame, any of that made of wood, plywood, paper, resin, aluminum and stainless steel may be used and, particularly when it is burned and disposed after use, that which is able to be burned such as being made of wood, plywood, paper and resin is preferably used.

Examples

Now the present invention will be specifically illustrated by way of the following Examples and Comparative Examples. The methods for the measurements therein were in accordance with the following methods.

(1) Moisture Adsorption Rate

A sample was placed in a constant-temperature and constant-humidity container adjusted to the temperature of $25 \pm 2°C$ and the humidity of $45 \pm 3\%$ and allowed to stand for 24 hours and the change in weight was measured and divided by the dry weight of the sample to give a moisture adsorption rate.

(2) Total Acidic Group Amount

The sample was washed to remove a chemical substance and dried and 0.5 g of the sample was dipped in 60 cc of a 1/100 N aqueous solution of sodium hydroxide in a conical flask and shaken in a water bath adjusted at 25°C for 3 hours. The aqueous solution was filtered through a glass funnel, 25 cc of the filtrate was taken out and subjected to a reverse titration using a 1/100N aqueous solution of hydrochloric acid and the total acidic group amount was determined according to the following formula where D was the difference from a blank (which was shaken similarly without adding a sample thereto).

$$\text{Total Acidic Group Amount (meq/g)} = \frac{D \times 60 \times 0.01}{25 \times 0.5}$$

(3) Specific Surface Area

ASAP 2010 manufactured by Shimadzu was used and specific surface area was calculated by a specific BET method (relative pressure: 0.02 to 0.2) from a nitrogen adsorption isothermal curve at the temperature of liquid nitrogen.

(4) Average Single Fiber Diameter

An activated carbon fiber in an appropriately small amount was fixed to a stand using tweezers, enlarged to 2, 000 to 4, 000 magnifications and taken pictures thereof by a scanning electron microscope, diameter of the fiber in the center of the picture was read out using a rule and fiber diameter was calculated taking a scale size into consideration. Ten pictures were taken and a mean value of the data was calculated and used as an average single fiber diameter.

(5) Transmission Velocity Coefficient of the Filter

A sheet was cut into a circular shape of 72 mm diameter and set in a cylindrical column, air of 10 cm/s wind velocity was flown so as to vertically hit the sheet and the difference in the pressures in the upper stream and the lower stream was measured to give a pressure loss. The measured wind velocity which was 10 cm/s in this case was divided by the pressure loss to give a transmission velocity coefficient of the filter.

(6) Evaluation for the Collecting Efficiency for the Radioactive Substance of the Filter

HE40T or QR100 (manufactured by Advantec Toyo), the sample which was punched into a size of 60 mm diameter and a backup filter CHC-50 (manufactured by Advantec Toyo) were installed in a collecting holder in the above order from the upstream side. A humidity-adjusted air containing $CH_3{}^{131}I$ generated by chemical reaction was flown for 30 minutes from the upstream side at the wind velocity of 8 cm per second. Radioactivity of the radioactive substance $^{131}I$ was measured by measuring the whole amount of the filter or a part of granular activated carbon in the case of CHC-50 using a gamma counter (Packard 5003 manufactured by Perkin Elmer Life Science). The collecting efficiency of the sample was determined by dividing the collected radioactivity of the sample by the total collected radioactivity of both of the sample and the backup filter excluding the collected radioactivity of HE40T.

(7) Evaluation for the Collecting Efficiency for the Radioactive Substance of the Filter after aeration for 24 days

HE40T or QR100 (manufactured by Advantec Toyo) and the sample which was punched into a size of 60 mm diameter were installed in a holder for aeration in this order from the upstream side. In a constant-temperature and constant-humidity chamber adjusted to the temperature of $25 \pm 2°C$ and the relative humidity of $40 \pm 3\%$, air was continuously aerated from the upstream side of the holder at a wind velocity of 40 cm per second for 24 day. After that, the sample was taken out and subjected to an evaluation for the collecting efficiency for the radioactive substance.

(8) Pressure Loss of the filter unit

The filter was subjected to a slit processing into a width of 583 mm and pleated in a predetermined height, a separator was inserted into the pleats and installed in a frame having 586 mm inner square and an adhesive was flown onto a contact point of the terminal of the slit with the frame to fix whereupon a filter unit was prepared. This filter was installed in a filter unit tester in accordance with JIS B 9908 and measurement was conducted by flowing of air where airflow was set at 28.3 $m^3$/min.

Example A1

Nonwoven fabric of a phenol-type fiber having a weight of 450 $g/m^2$ was poured into a burning apparatus. Temperature in the apparatus was raised from room temperature to 920°C at the rate of 5°C/minutes and kept for 30 minutes to carbonize. The atmosphere at that time was made insert ($N_2$). After carbonization, the inside of the apparatus was made an atmosphere containing 13% by volume of water vapor (remainder was $N_2$) and the temperature was kept at 920°C for 45 minutes to activate whereupon a nonwoven fabric of activated carbon fiber was prepared. With regard to the nonwoven fabric, the basis weight was 205 $g/m^2$, the thickness was 2.5 mm, the specific surface area was 1,580 $m^2$/g and the total acidic group amount was 0.02 meq/g. This activated carbon fiber was dipped in a 0.6% by weight solution of potassium iodide for one hour, dehydrated and dried to give an activated carbon fiber in which 1.0% by weight of potassium iodide was impregnated. Moisture adsorption rate, collecting efficiencies for radioactive substance in its initial stage and after the aeration for 24 days and lowering rate of collecting efficiency of this impregnated activated carbon fiber are shown in Table 1.

Example A2

Nonwoven fabric of a phenol-type fiber having a weight of 450 $g/m^2$ was poured into a burning apparatus. Temperature in the apparatus was raised from room temperature to 920°C at the rate of 5°C/minutes and kept for 30 minutes to carbonize. The atmosphere at that time was made insert ($N_2$). After carbonization, the inside of the apparatus was made an atmosphere containing 13% .by volume of water vapor (remainder was $N_2$) and the temperature was kept at 920°C for 60 minutes to activate whereupon a nonwoven fabric of activated carbon fiber was prepared. With regard to the nonwoven fabric, the basis weight was 198 $g/m^2$, the thickness was 2.4 mm, the specific surface area was 1,810 $m^2$/g and the total acidic group amount was 0.08 meq/g. This activated carbon fiber was dipped in a 0.6% by weight solution of potassium iodide for one hour, dehydrated and dried to give an activated carbon fiber in which 1.0% by weight of potassium iodide was impregnated. Moisture adsorption rate, collecting efficiencies for radioactive substance in its initial stage and after the aeration for 24 days and lowering rate of collecting efficiency of this impregnated activated carbon fiber are shown in Table 1.

Comparative Example A1

Nonwoven fabric of a phenol-type fiber having a weight of 450 $g/m^2$ was poured into a burning apparatus. Temperature in the apparatus was raised from room temperature to 860°C at the rate of 5°C/minutes and kept for 30 minutes to carbonize. The atmosphere at that time was made insert ($N_2$). After carbonization, the inside of the apparatus was made an atmosphere containing 13% by volume of water vapor (remainder was $N_2$) and the temperature was kept at 860°C for 45 minutes to activate whereupon a nonwoven fabric of activated carbon fiber (sample B) was prepared. With regard to the nonwoven fabric, the basis weight was 218 $g/m^2$, the thickness was 2.6 mm, the specific surface area was 1, 240 $m^2$/g and the total acidic group amount was 0.09 meq/g. This activated carbon fiber was dipped in a 0.8% by weight solution of 1,4-diaza-2,2,2-bicyclooctanefor 1 hour, dehydrated and dried to give an activated carbon fiber in which 10% by weight of 1,4-diaza-2,2,2-bicyclooctane was impregnated. Moisture adsorption rate, collecting efficiencies for radioactive substance in its initial stage and after the aeration for 24 days and lowering rate of collecting efficiency of this impregnated activated carbon fiber are shown in Table 1.

Comparative Example A2

Diammonium hydrogen phosphate was impregnated in an amount of 7% by weight to nonwoven fabric of cellulose-type fiber of 600 g/m$^2$ weight and poured into a carbonization treatment apparatus. Temperature in the apparatus was raised from room temperature to 300°C at the rate of 5°C/minutes and kept for 30 minutes to conduct a flame-resisting treatment, and further temperature in the apparatus was raised from 300°C to 920°C at the rate of 5°C/minutes and kept for 30 minutes to carbonize. The atmosphere at that time was made insert (N$_2$). After carbonization, the inside of the apparatus was made an atmosphere containing 13% by volume of water vapor (remainder was N$_2$) and the temperature was kept at 920°C for 45 minutes to activate whereupon a nonwoven fabric of activated carbon fiber was prepared. With regard to the nonwoven fabric, the basis weight was 148 g/m$^2$, the thickness was 1.9 mm, the specific surface area was 1,930 m$^2$/g and the total acidic group amount was 0.25 meq/g. This activated carbon fiber was dipped in a 0.6% by weight solution of potassium iodide for one hour, dehydrated and dried to give an activated carbon fiber in which 1.1% by weight of potassium iodide was impregnated. Moisture adsorption rate, collecting efficiencies for radioactive substance in its initial stage and after the aeration for 24 days and lowering rate of collecting efficiency of this impregnated activated carbon fiber are shown in Table 1.

Table 1

| | Moisture Adsorption Rate (%) | Collecting Efficiency for CH$_3$$^{131}$I (%) | | |
| --- | --- | --- | --- | --- |
| | | Initial Stage | After 24 Days | Lowering Rate |
| Example A1 | 5.3 | 100 | 95 | 5 |
| Example A2 | 3.8 | 100 | 73 | 27 |
| Comparative Example A1 | 14.5 | 100 | 10 | 90 |
| Comparative Example A1 | 3.9 | 86 | 50 | 36 |

Example B1

Fiber of a phenol type where fineness was 2.2 dTex and length was 72 mm was made into nonwoven fabric by a needle punch method to give nonwoven fabric where weight was 220 g/m$^2$ and thickness was 3.0 mm. Said nonwoven fabric was poured into a burning apparatus and temperature in the apparatus was raised from room temperature to 920°C at the rate of 5°C/minutes and kept for 30 minutes to carbonize. The atmosphere at that time was made insert (N$_2$). After carbonization, the inside of the apparatus was made an atmosphere containing 13% by volume of water vapor (remainder was N$_2$) and the temperature was kept at 920°C for 45 minutes to activate whereupon a nonwoven fabric constituted from activated carbon fiber was prepared. With regard to the nonwoven fabric, the basis weight was 121 g/m$^2$, the thickness was 2.1 mm, the average single fiber diameter of activated carbon fiber was 13 $\mu$m, the specific surface area was 1,550 m$^2$/g and the total acidic group amount was 0.02 meq/g. Said activated carbon fiber was dipped in a 1.0% by weight solution of potassium iodide for one hour, dehydrated and dried to give an activated carbon fiber in which 1.0% by weight of potassium iodide was impregnated. Amount of adsorbed moisture of this impregnated activated carbon fiber at the relative humidity of 45% was 5.2% by weight.

Example B1-1

Said impregnated activated carbon fiber was layered in five plies and both sides thereof were sandwiched by a spun lace nonwoven fabric made of polypropylene where weight was 35 g/m$^2$ and subjected to a needle punch to give a layered filter where total basis weight was 690 g/m$^2$ (in which amount of the activated carbon fiber was 600 g/m$^2$), thickness was 8.5 mm and transmission velocity coefficient of the filter was 0.091 cm/s/Pa. Collecting efficiencies for radioactive substance of this filter in its initial stage and after the aeration for 24 days are shown in Table 2.

Example B1-2

Said impregnated activated carbon fiber was layered in three plies and both sides thereof were sandwiched by a spun lace nonwoven fabric made of polypropylene where weight was 35 g/m$^2$ and subjected to a needle punch to give a layered filter where total basis weight was 427 g/m$^2$ (in which amount of the activated carbon fiber was 400 g/m$^2$), thickness was 5.2 mm and transmission velocity coefficient of the filter was 0.169 cm/s/Pa. Collecting efficiencies for radioactive substance of this filer in its initial stage and after the aeration for 24 days are shown in Table 2.

Example B1-3

The activated carbon filter prepared in Example B1-1 was slit into a width of 583 mm, made into pleats where each valley height was 280 mm and valley numbers were 20 and 39 sheets of paper separator which was molded into a wavy form of 7.2 mm height, 270 mm width and 583 mm length were sandwiched between the pleats of the filter, a foamed polyurethane resin was applied on the terminal of the filter and installed in a frame having 610 mm square of outer length and 290 mm depth constituted from a plywood of 12 mm thickness to prepare a filter unit. Wind velocity of the air passing through the filter in this filter unit was 0.08 m/s and weight and pressure loss of the unit are as shown in Table 3.

Example B2

Fiber of a phenol type where fineness was 5.5 dTex and length was 51 mm was made into nonwoven fabric by a needle punch method to give nonwoven fabric where weight was 450 g/m$^2$ and thickness was 4.0 mm. Said nonwoven fabric was poured into a burning apparatus and temperature in the apparatus was raised from room temperature to 920°C at the rate of 5°C/minutes and kept for 30 minutes to carbonize. The atmosphere at that time was made insert ($N_2$). After carbonization, the inside of the apparatus was made an atmosphere containing 13% by volume of water vapor (remainder was $N_2$) and the temperature was kept at 920°C for 45 minutes to activate whereupon a nonwoven fabric constituted from activated carbon fiber was prepared. With regard to the nonwoven fabric, the basis weight was 220 g/m$^2$, the thickness was 2.9 mm, the average single fiber diameter of activated carbon fiber was 22 $\mu$m, the specific surface area was 1,590 m$^2$/g and the total acidic group amount was 0.02 meq/g. Said activated carbon fiber was dipped in a 1.0% by weight solution of potassium iodide for one hour, dehydrated and dried to give an activated carbon fiber in which 1.0% by weight of potassium iodide was impregnated. Amount of adsorbed moisture of this impregnated activated carbon fiber at the relative humidity of 45% was 5.2% by weight.

Example B2-1

Said impregnated activated carbon fiber was layered in three plies and both sides thereof were sandwiched by a spun lace nonwoven fabric made of polypropylene where weight was 35 g/m$^2$ and subjected to a needle punch to give a layered filter where total basis weight was 728 g/m$^2$ (in which amount of the activated carbon fiber was 660 g/m$^2$), thickness was 7.8 mm and transmission velocity coefficient was 0.171 cm/s/Pa. Collecting efficiencies for radioactive substance of this filer in its initial stage and after the aeration for 24 days are shown in Table 2.

Example B2-2

Said impregnated activated carbon fiber was layered in two plies and both sides thereof were sandwiched by a spun lace nonwoven fabric made of polypropylene where weight was 35 g/m$^2$ and subjected to a needle punch to give a layered filter where total basis weight was 507 g/m$^2$ (in which amount of the activated carbon fiber was 440 g/m$^2$), thickness was 4.8 mm and transmission velocity coefficient was 0.25 cm/s/Pa. Collecting efficiencies for radioactive substance of this filer in its initial stage and after the aeration for 24 days are shown in Table 2.

Example B2-3

The filter prepared in Example B2-1 and the filter prepared in Example B2-2 were layered via a thermal melting fiber and adhered by heating to give a layered filter. The total basis weight of this layered filter was 1,245 g/m$^2$ (in which amount of activated carbon fiber was 1,100 g/m$^2$), thickness was 12.5 mm and transmission velocity coefficient was 0.092 cm/s/Pa. Collecting efficiencies for radioactive substance of this filter in its initial stage and after the aeration for 24 days are shown in Table 2.

Example B2-4

The activated carbon filter prepared in Example B2-1 was slit into a width of 583 mm, made into pleats where each valley height was 280 mm and valley numbers were 20 and 39 sheets of paper separator which was molded into a wavy form of 7.2 mm height, 265 mm width and 583 mm length were sandwiched between the pleats of the filter, a resin was applied on the terminal of the filter and installed in a frame having 610 mm square of outer length and 290 mm depth constituted from a plywood of 12 mm thickness to prepare a filter unit. Wind velocity of the air passing through the filter in this filter unit was 0.08 m/s and weight and pressure loss of the unit are as shown in Table 3.

Comparative Example B1

Ammonium monohydrogen phosphate (10% by weight) was impregnated in the polynosic fiber where fineness was 16.5 dTex and length was 51 mm and made into nonwoven fabric by a needle punch method to give nonwoven fabric where weight was 600 $g/m^2$ and thickness was 6.0 mm. Said nonwoven fabric was poured into a burning apparatus and temperature in the apparatus was raised from room temperature to 250°C, kept at that temperature for 30 minutes to conduct a flame-resisting treatment, raised up to 895°C at the rate of 5°C per minute and kept at that temperature for 30 minutes to conduct carbonization. The atmosphere at that time was made insert ($N_2$) . After carbonization, the inside of the apparatus was made an atmosphere containing 13% by volume of water vapor (remainder was $N_2$) and the temperature was kept at 895°C for 45 minutes to activate whereupon a nonwoven fabric constituted from activated carbon fiber was prepared. With regard to the nonwoven fabric, the basis weight was 200 $g/m^2$, the thickness was 2.6 mm, the average single fiber diameter of activated carbon fiber is 27 $\mu$m, the specific surface area was 1, 520 $m^2/g$ and the total acidic group amount was 0 .1 meq/g. Said activated carbon fiber was dipped in a 1.0% by weight solution of potassium iodide for one hour, dehydrated and dried to give an activated carbon fiber in which 1.0% by weight of potassium iodide was impregnated. Amount of adsorbed moisture of this impregnated activated carbon fiber at the relative humidity of 45% was 6.1% by weight.
Said impregnated activated carbon fiber was layered in three plies and both sides thereof were sandwiched by a spun lace nonwoven fabric made of polypropylene where weight was 35 $g/m^2$ and subjected to a needle punch to give a layered filter where total basis weight was 680 $g/m^2$ (in which amount of the activated carbon fiber was 600 $g/m^2$), thickness was 7.8 mm and transmission velocity coefficient was 0.25 cm/s/Pa. Collecting efficiencies for radioactive substance of this filer in its initial stage and after the aeration for 24 days are shown in Table 2.

Comparative Example B2

Both sides of a sheet of nonwoven fabric constituted from the activated carbon fiber prepared in Example B1 were sandwiched with nonwoven fabric made of polypropylene where fineness was 5.5 dTex and basis weight was 200 $g/m^2$ and subjected to a needle punch to give a layered filter having the total basis weight of 511 $g/m^2$ (in which activated carbon fiber amount was 120 $g/m^2$), thickness was 5.2 mm and transmission velocity coefficient was 0.171 cm/s/Pa. Collecting efficiencies for radioactive substance of this filter in its initial stage and after the aeration for 24 days are shown in Table 2.

Comparative Example B3

Both sides of a sheet of nonwoven fabric constituted from the activated carbon fiber prepared in Example B2 were sandwiched with spun bonded nonwoven fabric made of polypropylene where basis weight was 12 $g/m^2$ and subjected to a needle punch to give a layered filter having the total basis weight of 220 $g/m^2$ (in which activated carbon fiber amount was 200 $g/m^2$), thickness was 2.7 mm and transmission velocity coefficient was 0.666 cm/s/Pa. Collecting efficiencies for radioactive substance of this filter in its initial stage and after the aeration for 24 days are shown in Table 2.

Comparative Example B4

A thermal melting fiber was inserted between the layered filter prepared in Example B1-1 and the layered filter prepared in Example B1-2 followed by subjecting to a heating adhesion to give a layered filter. With regard to the obtained layered filter, the total basis weight was 1,210 $g/m^2$ (in which amount of activated carbon fiber was 1,125 $g/m^2$), thickness was 13.0 mm and transmission velocity coefficient was 0.057 cm/s/Pa. Collecting efficiencies for radioactive substance of this filter in its initial stage and after the aeration for 24 days are shown in Table 2.
Said activated carbon filter was slit into a width of 583 mm, made into pleats where each valley height was 280 mm and valley numbers were 16 and 31 sheets of paper separator which was molded into a wavy form of 5.0 mm height, 265 mm width and 583 mm length were sandwiched between the pleats of the filter, a resin was applied on the terminal of the filter and installed in a frame having 610 mm square of outer length and 290 mm depth constituted from a plywood of 12 mm thickness to prepare a filter unit. Wind velocity of the air passing through the filter in this filter unit was 0.10 m/s and weight and pressure loss of the unit are as shown in Table 3.

Comparative Example B5

The filter prepared in Example B2-3 and the filter prepared in Example B2-2 were layered via a thermal melting fiber and adhered by heating to give a layered filter. The total basis weight of this layered filter was 1,980 g/m² (in which amount of activated carbon fiber was 1,760 g/m²) and thickness was 20.2 mm. Collecting efficiencies for radioactive substance of this filter in its initial stage and after the aeration for 24 days are shown in Table 2.
Said activated carbon fiber filter was slit into a width of 583 mm, a spacer where valley height was 280 mm and valley numbers were 3 was inserted and pleating was tried but the polypropylene nonwoven fabric at the folding part was partially broken and, in addition, bending stress upon bending was big whereby fabrication was very difficult and pleating was not possible.

Table 2

| | | Collecting Efficiency of the filer for $CH_3^{131}I$ | |
|---|---|---|---|
| | | Initial Stage (%) | After 24 Days (%) |
| Example B1 | B1-1 | 100 | 96 |
| | B1-2 | 100 | 63 |
| Example B2 | B2-1 | 100 | 85 |
| | B2-2 | 100 | 63 |
| | B2-3 | 100 | 95 |
| Comparative Example B1 | | 100 | 48 |
| Comparative Example B2 | | 100 | 3 |
| Comparative Example B3 | | 100 | 27 |
| Comparative Example B4 | | 100 | 99 |
| Comparative Example B5 | | 100 | 99 |

Table 3

| | | Properties of the unit | |
|---|---|---|---|
| | | Pressure Loss (Pa) | Weight (kg) |
| Example B1 | B1-3 | 220 | 11 |
| Example B2 | B2-4 | 170 | 9 |
| Comparative Example B4 | | 360 | 10 |
| Comparative Example B5 | | Not Manufacturable | |

**Claims**

1. A filter for removal of radioactive substances where the radioactive substances in small amounts in gas phase are collected using activated carbon fiber, **characterized in that**, total acidic group amount in said activated carbon fiber is not more than 0.2 meq/g, that at least one kind of chemical substance is impregnated in said activated carbon fiber and that the equilibrium moisture adsorption rate of said activated carbon fiber at the relative humidity of 45% is not more than 10% by weight.

2. The filter for removal of the radioactive substances according to claim 1, wherein the impregnated amount of the chemical substances to the activated carbon fiber is 0.1% by weight to 5% by weight.

3. A filter unit for removal of the radioactive substances, **characterized in that**, the filter for removal of the radioactive substances according to claim 1 or 2 is used.

**4.** A filter for removal of radioactive substances where the radioactive substances in small amounts in gas phase are collected using a nonwoven fabric constituted from activated carbon fiber, **characterized in that**, an average single fiber diameter of said activated carbon fiber is not more than 25 $\mu$m.

**5.** The filter for removal of the radioactive substances according to claim 4, wherein a transmission velocity coefficient of the filter is 0.07 to 0.60 cm/s/Pa.

**6.** The filter for removal of the radioactive substances according to claim 4 or 5, wherein weight of the activated carbon fiber contained in the filter is 150 g/m$^2$ to 1,500 g/m$^2$.

**7.** A filter unit for removal of the radioactive substances, **characterized in that**, the filter for removal of the radioactive substances according to any of claims 4-6 is used.

[Fig. 1]

<table>
<tr><td colspan="2" align="center"><b>INTERNATIONAL SEARCH REPORT</b></td><td>International application No.<br>PCT/JP2006/306872</td></tr>
</table>

| | |
|---|---|
| A. CLASSIFICATION OF SUBJECT MATTER<br>***G21F9/02*(2006.01), *B01J20/20*(2006.01)**<br><br><br><br>According to International Patent Classification (IPC) or to both national classification and IPC | |

B. FIELDS SEARCHED

Minimum documentation searched (classification system followed by classification symbols)
***G21F9/02*(2006.01), *B01J20/20*(2006.01)**

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y | JP 2004-191347 A (Kabushiki Kaisha Wakaida Enjiniaringu), 08 July, 2004 (08.07.04), Full text; Figs. 1 to 8 (Family: none) | 4-7 |
| Y | JP 2004-314064 A (Bluecher GmbH), 11 November, 2004 (11.11.04), Full text; Fig. 1 & US 2004/0237790 A1 & EP 001468732 A & DE 010318053 A | 4-7 |

☐ Further documents are listed in the continuation of Box C.     ☐ See patent family annex.

| | |
|---|---|
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>06 June, 2006 (06.06.06) | Date of mailing of the international search report<br>13 June, 2006 (13.06.06) |
| Name and mailing address of the ISA/<br>Japanese Patent Office | Authorized officer |
| Facsimile No. | Telephone No. |

Form PCT/ISA/210 (second sheet) (April 2005)

<div align="center">

**INTERNATIONAL SEARCH REPORT**

</div>

| | |
|---|---|
| | International application No. |
| | PCT/JP2006/306872 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Claims 1-3 pertain to a radioactive-substance-removing filter and filter unit characterized in that activated carbon fibers having a total acid group amount of 0.2 meq/g or smaller are employed, the activated carbon fibers have at least one chemical substance adherent thereto, and the activated carbon fibers have an equilibrium water adsorption of 10 wt.% or less as measured at a relative humidity of 45%.
    Claims 4-7 pertain to a radioactive-substance-removing filter and filter unit which employ activated carbon fibers having an average single-fiber diameter of 25 μm or smaller.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable,
the                              payment of a protest fee..

                               ☐ The additional search fees were accompanied by the applicant's protest but the applicable protest
                                 fee was not paid within the time limit specified in the invitation.

                               ☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003066191 A
- JP 2004205490 A

- JP 6343856 A